(19) Europäisches Patentamt
European Patent Office
Office européen des brevets

(11) **EP 1 497 998 B1**

(12) **EUROPEAN PATENT SPECIFICATION**

(45) Date of publication and mention
of the grant of the patent:
**10.09.2008 Bulletin 2008/37**

(51) Int Cl.:
*H04Q 7/00* (2006.01)

(21) Application number: **03721206.5**

(22) Date of filing: **15.04.2003**

(86) International application number:
**PCT/SE2003/000611**

(87) International publication number:
**WO 2003/088686 (23.10.2003 Gazette 2003/43)**

(54) **METHOD OF MULTI-SERVICE ALLOCATION IN MULTI-ACCESS SYSTEMS**

VERFAHREN ZUR MEHRFACHDIENSTZUTEILUNG IN MEHRFACHZUGRIFFSSYSTEMEN

PROCEDE D'ATTRIBUTION DE SERVICES MULTIPLES DANS UN SYSTEME A ACCES MULTIPLES

(84) Designated Contracting States:
**AT BE BG CH CY CZ DE DK EE ES FI FR GB GR HU IE IT LI LU MC NL PT RO SE SI SK TR**

(30) Priority: **17.04.2002 US 373631 P**
**01.04.2003 US 404799**

(43) Date of publication of application:
**19.01.2005 Bulletin 2005/03**

(73) Proprietor: **TELEFONAKTIEBOLAGET LM ERICSSON (publ)**
**164 83 Stockholm (SE)**

(72) Inventors:
• **FURUSKÄR, Anders**
**S-112 69 Stockholm (SE)**
• **ALMGREN, Magnus**
**S-191 43 Sollentuna (SE)**
• **MAGNUSSON, Sverker**
**S-112 36 Stockholm (SE)**
• **SIMONSSON, Arne**
**S-954 33 Gammelstad (SE)**

• **MAGNUSSON, Per**
**S-582 36 Linköping (SE)**

(74) Representative: **Sjöberg, Mats Hakan**
**Ericsson AB**
**Torshamnsgatan 23**
**164 80 Stockholm (SE)**

(56) References cited:
**WO-A-01/52567**

• **FURUSKAR A: "Allocation of multiple services in multi-access wireless systems" 2002 4TH INTERNATIONAL WORKSHOP ON MOBILE AND WIRELESS COMMUNICATIONS NETWORK (CAT. NO.02EX614), MWCN 2002 - 4TH IEEE CONFERENCE ON MOBILE AND WIRELESS COMMUNICATIONS NETWORKS, STOCKHOLM, SWEDEN, 9-11 SEPT. 2002, pages 261-265, XP002245198 2002, Piscataway, NJ, USA, IEEE, USA ISBN: 0-7803-7605-6**

**Description**

**BACKGROUND OF THE INVENTION**

**TECHNICAL FIELD**

The present invention relates in general to allocation in wireless communication systems of multiple services in multi-access systems and more particularly, to allocating services, such as, for example, voice and data services among multiple accesses, such as, for example, Wideband Code Division Multiple Access (WCDMA) and Global System for Mobile Communications/Enhanced Data for GSM Evolution (GSM/EDGE).

**HISTORY OF RELATED ART**

Two expected characteristics of future wireless networks are support for multiple services (e.g., voice and data) and use of multiple radio interface standards (i.e., multi-access). These expected characteristics raise the question of how to best map the multiple services onto different subsystems using the multiple radio interface standards. In particular, given multi-service capacity regions for the different subsystems and a total traffic load, a scheme for determining how traffic should be distributed over the different subsystems is needed.

The published PCT application WO 01/52567A2 represents the general state of the art for base station synchronization for handover in a hybrid GSM/CDMA network. A communication link is established over the first air interface between the mobile station and the first base station. Data is received from the mobile station responsive to a signal received by the mobile station over the second air interface from the second base station substantially without breaking the communication link with the first base station. The mobile station is handed over from the first to the second base station responsive to the data received therefrom.

Current approaches in which access is selected based on service are not always optimal. Moreover, allocation of each service primarily to a subsystem according to interface standard does not utilize multi-service trunking gain (i.e., when a combined service capacity is relatively higher than a capacity of each service alone). In addition, selection of primarily one access all the way to an access coverage limit (i.e., last cell border) is more costly than a controlled selection of all available access points. Resulting service mixes per access are often uncontrolled and random depending on coverage and mobility. For example, Global System for Mobile Communications (GSM) compressed mode handover measurement in Universal Mobile Telecommunications Systems (UMTS) can result in traffic flow from UMTS to GSM in poor UMTS coverage areas.

**SUMMARY OF THE INVENTION**

These and other drawbacks are overcome by embodiments of the present invention, which provides a method of multi-service allocation in multi-access systems. A method of allocating users in a multi-access communications system includes determining a plurality of capacity regions. The multi-access communications system includes a plurality of subsystems and offers a plurality of services. Each of the plurality of capacity regions corresponds to a subsystem of the plurality of subsystems. The method also includes the steps of determining a combined capacity region based on the determined plurality of capacity regions and allocating at least one user among the plurality of subsystems using the determined combined capacity region.

**BRIEF DESCRIPTION OF THE DRAWINGS**

A more complete understanding of exemplary embodiments of the present invention can be achieved by reference to the following Detailed Description of Preferred Exemplary Embodiments of the Invention, when taken in conjunction with the accompanying Drawings, wherein:

FIGURE 1 is a diagram of quality (Q) as a function of aggregate load ($L_{tot}$) in a two-service system;
FIGURE 2 is a diagram of an exemplary capacity region;
FIGURE 3 is a diagram of a number of data users as a function of a number of voice users in a multi-access system that includes subsystems 1 and 2;
FIGURE 4 is a diagram that illustrates optimal subsystem service mixes for subsystems 1 and 2 as well as a resulting optimal combined capacity;
FIGURE 5 is a diagram of two service capacity regions for two different subsystems (i.e., subsystem 1 and subsystem 2) that illustrates graphical derivation of an optimal service mapping;
FIGURES 6A-B illustrate an exemplary allocation of services in accordance with principles of the present invention;

FIGURES 7A-F illustrate exemplary combined capacity regions in accordance with principles of the present invention;
FIGURES 8A and 8B illustrate exemplary voice and worldwide web (WWW) capacity regions for GSM/EDGE and WCDMA;
FIGURES 9A and 9B illustrate a three-dimensional capacity region of a triple-service system offering low-quality and high-quality WWW services and voice;
FIGURE 10 is a flow diagram that illustrates a service allocation algorithm in accordance with principles of the invention.

## DETAILED DESCRIPTION OF PREFERRED EXEMPLARY EMBODIMENTS OF THE INVENTION

In multiple-service systems, a maximal number of sustainable users typically depends on a service mix. Given a certain service mix, capacity in multiple-service systems can be measured similarly to single-service systems. However, in multiple-service systems, not only one, but a plurality of, services must achieve acceptable quality. Thus, for a fixed service mix, capacity can be defined as a maximal aggregate load for which all services' quality requirements are sustained. For services 101 and 102 and a service mix $\alpha$, the capacity is defined as $L_{totmax}(\alpha) = \max L_{tot}$: $Q_{101}(\alpha, L_{tot}) \geq Q_{101min}$ and $Q_{102}(\alpha, L_{tot}) \geq Q_{102min}$. $Q_{101min}$ and $Q_{102min}$ are the minimal acceptable quality levels for service 101 and service 102, respectively. The capacity can also be expressed as the pair $[U_{101max}(\alpha)\ U_{102max}(\alpha)]= L_{totmax}(\alpha) * [\alpha_{101}\alpha_{102}]$.

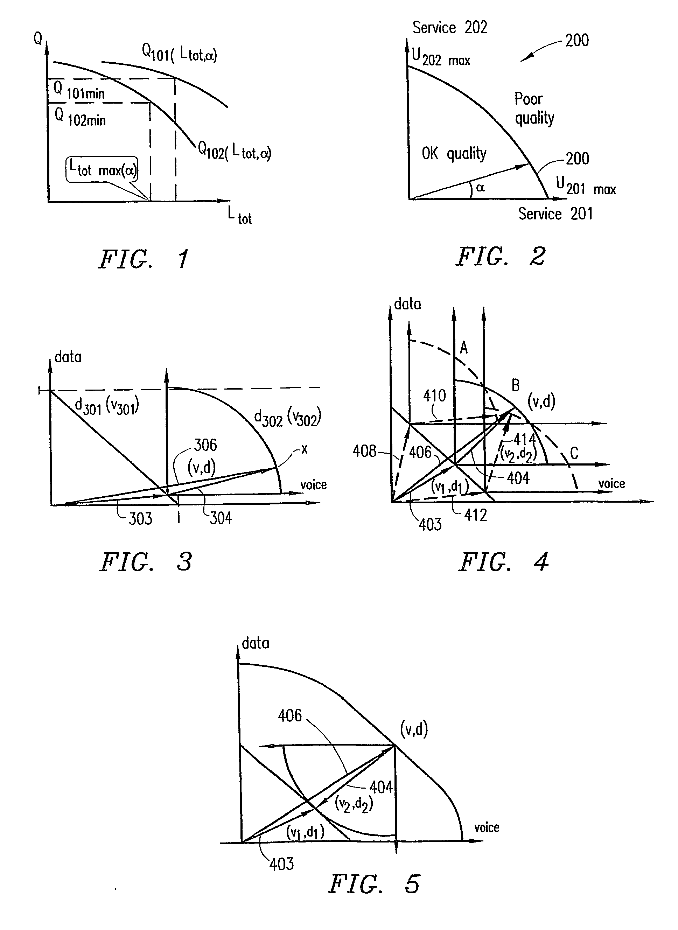

FIGURE 1 is a diagram of quality (Q) as a function of aggregate load ($L_{tot}$) in a two-service system. A fixed service mix can be defined as a total number of users ($U_{101}$) of a first service (service 101) and users ($U_{102}$) of a second service (service 102), such that $L_{tot} = U_{101}+U_{102}$. Service 101 could be, for example, voice, while service 102 could be, for example, data. A service mix ($\alpha$) is defined as a fraction of users of each service type, such that $\alpha = [U_{101}/L_{tot},\ U_{102}/L_{tot}]$. A capacity ($L_{totmax}(\alpha)$) can therefore be expressed either as a pair $[L_{tot}, \alpha]$ or as a pair of the maximal number of users per service for the service mix $[U_{101max}(\alpha),\ U_{102max}(\alpha)]$. By determining the capacity for a range of all possible service mixes (i.e., for all $\alpha$), a capacity region $K$ can be defined as $K=[U_{101}\ U_{102}]$:$Q_{101} \geq Q_{101min}$ and $Q_{102} \geq Q_{102min}$. The capacity region $K$ is thus delimited by $L_{totmax}(\alpha)$.

A capacity region is a measure of a capacity of, for example, a network or one or more cells of a network, to serve users of different services. In general, a capacity region is defined as a set of numbers of users of different services that can be supported by a system. A limit of the capacity region can, for example, be described as a function $U_N(U_1,...,U_{N-1})$, which represents the maximal number of service-N users as a function of the number of users of services 1 to N-1.

The manner is which support by a system of users is defined can vary. The present invention is applicable regardless of how support by the system is defined, so long as a limit of the capacity region can be found. Specific examples of definitions of a capacity region $K$ include:

$$1. \qquad K = \{U_1,...,U_N\} : Q_1 > Q_{1min},...,Q_N > Q_{Nmin}$$

In other words, the set of numbers of users of services 1 to N for which some minimum quality levels are fulfilled for all services.

$$2. \qquad K = \{U_1,...U_N\} : P_{tot} < P_{max}$$

In other words, the set of numbers of users of services 1 to N for which the total output power $P_{tot}$ does not exceed some maximal value $P_{max}$.

$$3. \qquad K = \{U_1,...U_N\} : C_{tot} < C_{max}$$

In other words, the set of numbers of users of services 1 to N for which the total number of used channels $C_{tot}$ does not exceed the number of available channels $C_{max}$.

The capacity region is typically viewed as a capacity of a network or a portion of a network to serve users of different services. Generally speaking, the smaller the area of the network that is under consideration, the more time-varying the capacity region is. The capacity regions also typically differ between areas or cells, depending on, for example, cell size and radio environment. In addition, when cost of access selection is taken into account, the capacity region typically increases.

FIGURE 2 is a diagram of an exemplary capacity region 200. The capacity region 200 is delimited by a curve $L_{totmax}(\alpha)$, which is equivalent to a curve achieved by connecting pairs [$U_{201max}(\alpha)$, $U_{202max}(\alpha)$] of services 201 and 202 for all $\alpha$. For traffic loads inside the capacity region 200, acceptable quality is achieved for both the service 201 and the service 202. The capacity region 200 can also be expressed as a non-parameterized function $U_{202}max(U_{201max})$. In other words, $U_{202max}(U_{201max})$ represents the maximal number of service 202 users as a function of a number of service 201 users. In FIGURE 2, a service mix corresponds to an angle from the origin and the aggregate load corresponds to a sum of the number of users per service type (e.g., $U_{201} + U_{202}$). In other words, the aggregate load corresponds to the sum of the service 202 and the service 201 coordinates of a given point in FIGURE 2.

It should be noted that, for two different subsystems A and B of a system C, subsystem A might, for example, be better than subsystem B for some service mixes, and vice versa for other service mixes. The capacity of the system C can be measured either for a fixed service mix, for which the capacity region should stretch as far as possible, or by fixing the number of users of one service, for which the maximal number of users of other service(s) should be as great as possible.

More formally, and with further reference to FIGURE 2, when maximizing capacity, two objective functions exist: either the aggregate load ($L_{tot} = U_{201}+U_{202}$) for a fixed service mix ($\alpha$), or $U_{202}(U_{201})$ for a fixed number of service 201 users $U_{201}$ With the same control variables at hand, the use of these different objective functions necessarily leads to the same capacity region. Which objective function is preferred depends on which objective function best suits the analysis employed.

Capacity-region analysis can be applied to multi-access multi-service systems. In multi-access multi-service systems, a combined capacity region limits the maximal number of users that can be accommodated by all subsystems of a system while achieving acceptable quality for all service types. A shape of a combined capacity region depends on a shape of subsystem capacity regions that, in combination, form the combined capacity region and also depends on how service types are distributed on the subsystems. Embodiments of the present invention can be used to allocate services to the subsystems in order to maximize the combined capacity region. In particular, for a given total service mix, a determination can be made of which service mixes should be used in the subsystems in order to maximize the total number of served users in the system.

For a given total traffic load, embodiments of the present invention permit optimal service mixes per individual subsystem to be found from individual capacity regions. The optimal service mixes are optimal in the sense that the optimal service mixes maximize the total traffic that can be carried for the total service mix. In addition, a service-allocation algorithm utilizes the found optimal service mixes in order to achieve an optimal overall capacity region.

A combined voice-service capacity ($v$) of a system is given by a sum of capacities in subsystems making up the system. For example, in a system having subsystems x and y, $v = v_x+v_y$. If each of the subsystem x and the subsystem y offers two services, data ($d$) and voice ($v$), then $d(v) = d_x(v_x)+d_y(v_y)$, wherein $d(v)$ represents data users as a function of voice users for the system as a whole.

FIGURE 3 is a diagram of a number of data users as a function of a number of voice users in a multi-access system that includes subsystems 301 and 302. In FIGURE 3, $d_{301}(v_{301})$ represents a number of data users as a function of voice users in the subsystem 301. In similar fashion, $d_{302}(v_{302})$ represents a number of data users as a function of a number of voice users in the subsystem 302. FIGURE 3 illustrates a capacity of the subsystem 301 illustrated by arrow 303 at a given value of $d_{301}$ and $v_{301}$. FIGURE 3 also illustrates a capacity 304 of subsystem 302 at a given value of $d_{302}$ and $v_{302}$. Using vector arithmetic, arrows 303 and 304 are added to yield an overall system combined capacity illustrated by arrow 306. When the relative cost for supporting different service types differs between the subsystems 301 and 302 (i.e., when a given service type requires more resources per user in one subsystem than another), subsystem service allocations affect the combined capacity of the overall system made up of subsystems 301 and 302.

For example, in FIGURE 3, the cost of adding a certain number of data users in the subsystem 301 is removing the same number of voice users, because the slope of the function $d_{301}(v_{301}) = 1$. In addition, because the slope of the function $d_{301}(v_{301})$ is constant, the number of voice users that must be removed in order to add the certain number of data users remains constant. In contrast, at point X, the cost of adding the same number of data users in the subsystem 302 is only a fraction of the certain number of voice users in the subsystem 302 because the function $d_{302}(v_{302})$ is not constant. Therefore, the number of voice users that must be removed in order to add the certain number of data users in subsystem 302 varies depending upon the number of voice users in subsystem 302. Thus at point X, different service-allocation alternatives affect the combined capacity in the sense that allocating the data users to system 302 yields a greater combined capacity than allocating the data users to subsystem 301. A gain in combined capacity is thus achievable by allocating services where their cost is the smallest when measured in removed users of other services.

FIGURE 4 is a diagram that illustrates optimal subsystem service mixes for subsystems 401 and 402, as well as a resulting optimal combined capacity. For a given total service mix, all possible combinations of subsystem service mixes that together fulfil a total service mix are tested for their resulting combined capacity. The subsystem service mix combinations that yield the highest capacity are the optimal ones. Cases A, B, and C are depicted in FIGURE 4. Case B is the optimal case, while cases A and C are non-optimal cases, as described further below. In FIGURE 4, the optimal subsystem service mix for each of the subsystems 401 and 402 is depicted in case B by arrows 403 and 404, respectively. For each value of $d_{401}$ and $v_{401}$ and $d_{402}$ and $v_{402}$, the combined capacity for all values $(v,d)$ is determined. Arrow 406 represents the optimal total service mix that results from vector addition of arrows 403 and 404. The combined capacity testing for a given total service mix as described above is repeated for all total service mixes to find the combined capacity region, which is defined by all possible combinations of subsystem service mixes.

In case A, arrows 408 and 410 represent a given possible service mix of the subsystem 401 and the subsystem 402, respectively. For case A, better subsystem service mixes can be found by moving data users from the subsystem 401 to the subsystem 402 and vice-versa for voice users. The better subsystem mixes are due to the delta in supported data users per voice user, given by the slopes of the respective subsystem capacity regions, being much greater in the subsystem 402 than in the subsystem 401. In case A, by moving a data user from the subsystem 401 to the subsystem 402, more data capacity is freed up in the subsystem 401 than is lost in the subsystem 402.

In case C, arrows 412 and 414 represent a given possible service mix of the subsystem 401 and 402, respectively. For case C, the situation is the opposite that of case A. The slope in case C is greater in the subsystem 401 than in the subsystem 2; therefore, better solutions are found by moving data users from the subsystem 2 to the subsystem 401. Data users should typically be put in the system with the steeper slope, and vice-versa for voice.

Better solutions can be found as long as the individual subsystem capacity region slopes differ for the service mixes in question. On the other hand, if the individual subsystem capacity region slopes are equal at a given service mix, as in case B, better solutions cannot be found. The service mixes in question thus result in a locally optimal (or locally minimal) solution. Hence, locally optimal service mixes are characterized by corresponding subsystem capacity region slopes being equal. To find a global optimum, all locally optimal service mixes, including any end-point solutions, must be found and compared to one another.

A delta in supported data users per voice user is given by the negative derivative of the capacity region limit $(-\partial d/\partial v)$. The following allocation rules can thus be employed to find local maxima:

Rule 1.  If $\partial d_1/\partial v_1 > \partial d_2/\partial v_2$: increase $v_1$ and decrease $v_2$ until $\partial d_1/\partial v_1 = \partial d_2/\partial v_2$.

Rule 2.  If $\partial d_1/\partial v_1 > \partial d_2/\partial v_2$: decrease $v_1$ and increase $v_2$ until $\partial d_1/\partial v_1 = \partial d_2/\partial v$

The intuitive meaning of Rules 1 and 2 can become somewhat blurred by the fact that the derivatives are negative. However, Rule 1 can be interpreted as follows: If $d_1$ decreases slower with increasing $v_1$ than $d_2$ does with increasing $v_2$, $v_1$ should be increased at the expense of $v_2$.

A more comprehensive mathematical derivation of the above characteristics of the optimal service allocations is provided below in a sub-section of the Detailed Description entitled Mathematical Derivation: In the Mathematical Derivation sub-section, cases with arbitrary numbers of services and subsystems are described. Although the analysis of the Mathematical Derivation subsection is relatively straightforward, it is complemented below by a graphical approach that can be used to understand a shape of the optimal combined capacity region and the optimal service mixes.

FIGURE 5 is a diagram of two service capacity regions for two different subsystems (i.e., the subsystem 401 and the subsystem 402 shown in FIGURE 4) that illustrates graphical derivation of an optimal service mapping. In FIGURE 5, the capacity region of the subsystem 402 is mirrored, and the origin of the mirrored capacity region of the subsystem 402 is put on a line corresponding to a total service mix in question. By moving the mirrored capacity region of the subsystem 402 as far outward as possible while maintaining a coinciding point between the capacity regions of the subsystem 402 and the mirrored capacity region of the subsystem 402, an optimal service mix can be found. An intersection of the two capacity regions is located at optimal service mappings $(v_{401}, d_{401})$ and $(v_{402}, d_{402})$. The origin of the mirrored capacity region of the subsystem 402 is located at $(v, d)$, which represents the optimal combined capacity. Notably, the solution according to FIGURE 5 is the same as that found in FIGURE 4.

If the intersection of the capacity regions occurs at inner points of the capacity regions (i.e., between the single-service endpoints of all voice or all data), the two derivatives are equal, as seen in FIGURE 5. If both capacity regions are convex (relative to points outside the capacity regions), there will be an inner maximum, and hence service should be ideally mixed in each of the subsystems. In contrast, if both capacity regions are concave, the intersection will always occur at an extreme point of the capacity regions, indicating that services should be separated into different capacity regions as much as possible.

Embodiments ofthe present invention can be used to find optimal service mixes to be used at the combined capacity limit of the system. A service allocation algorithm can be used that, for any traffic load, allocates users between the subsystems, so that when traffic loading increases, the combined capacity limit is optimal.

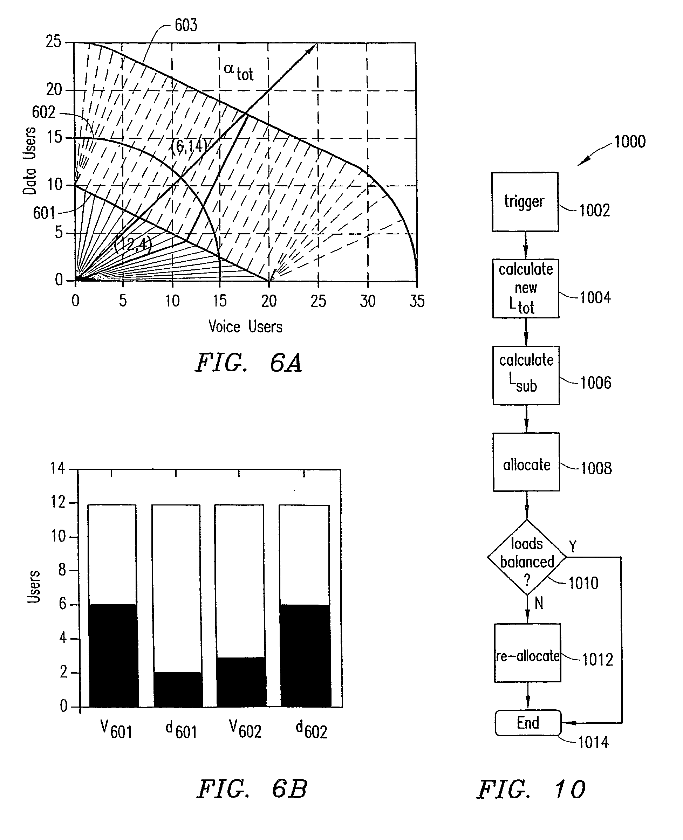

FIGURE 10 is a flow diagram that illustrates a service allocation algorithm in accordance with principles of the invention. In a flow 1000, for every new arrival, terminated call, handover, or other pre-defined trigger 1002, a new total service mix $L_{tot}$, including any new arrival, is calculated at step 1002. next, at step 1004, an optimal service mix per subsystem $(\alpha_m)$ is derived (e.g., through table look-up) for the new total service mix. At step 1006, a relative load $(l_{sub})$

is calculated per service $n$ and subsystem $m$: $lsub = U_{mn}/U_{mnmax} (\alpha_m)$. $U_m$ denotes the number of service $n$ users in subsystem $m$, excluding the new arrival, and $U_{mnmax}(\alpha_m)$ is the subsystem capacity for the service mix in question (from the capacity region).

At step 1008, the new arrival is allocated to the relatively least-loaded subsystem. (If the service type is $n=k$, find $min_m(l_{mk})$.) At step 1010, a determination is made whether the relative loads are balanced. If it is determined at step 1010 that the relative loads are not balanced, such as, for example, due to a large change in optimal service allocation, at step 1012, services are reallocated in order to balance relative loads among the subsystems. From step 1012, execution ends at step 1014. If it is determined at step 1010 that the relative loads are balanced, execution ends at step 1014.

The algorithm illustrated by the flow 1000 can be described as measuring the total service mix and distributing users among the subsystems according to the optimal service mixes per subsystem for that measured total service mix. The absolute number of users per subsystem is balanced in a relative way, thereby also balancing the amount of spare resources. A balance in spare resources gives the subsystems equal capabilities to handle changes in resource demands due to, for example, user movement.

FIGURES 6A and 6B illustrate an exemplary allocation of services in accordance with principles of the present invention. FIG 6A shows capacity regions for subsystem 601 and subsystem 602, as well as a combined capacity region for a total system (i.e., system 603) including the subsystems 601 and 602. Capacity regions of the system 603 and the subsystems 601 and 602 are labeled in FIGURE 6A.

FIGURE 6B shows a number of voice and data users in the subsystems 601 and 602, respectively. Thus, a total system load of the system 603 is 9 voice users and 8 data users, of which 6 voice users and 2 data users are allocated to the subsystem 601, and 3 voice and 6 data users are allocated to the subsystem 602. When a ninth data user arrives, the new service mix becomes $\alpha_{tot}$ = *[9 9]/(+9) = [0.50.5]*. In other words, 50% voice users and 50% data users. For this 50/50 mix, as seen in FIGURE 6A, the optimal voice/data service mix for subsystem 1 is ($\alpha_{601}$= *[12 4]/ (12+4)=[0.75 0.25]* and $\alpha_{602}$ = *[6 14]/(6+14)=[0.3 0.7]*. In addition, it can be seen that $U_{601voice\ max}$=12, $U_{602data\ max}$=4, $U_{602voice\ max}$=6, and $U_{602datamax}$=14. The relative loads before the ninth voice user arrives are thus $l_{601voice}$ 6/12=0.5, $l_{601data}$ =2/4=0.5, $l_{602voice}$=3/6=0.5, and $l_{602data}$= 6/14=0.43, as seen in FIGURE 6A. Since the relative data load is lower in the subsystem 602, the new (i.e, ninth) data user is allocated to the subsystem 602.

Service allocations according to principles of the present invention can be extended to take individual user characteristics into account, including, for example, radio situations of individual users in the different subsystems. The radio situation of an individual user might cause the cost for supporting the individual user to differ significantly from an average value over the allocation area. Further, a user might be in good radio conditions in one subsystem, but in poor conditions in other subsystems.

For example, in a two-access system that includes subsystems A and B, each user can be assigned a set of weights $c_{iA}$ and $c_{iB}$. $c_{iA}$ and $c_{iB}$, which can be time-variant, reflect the relative radio resource cost of supporting the user in the subsystem A and the subsystem B. A weight of 1.0 can, for example, correspond to an average cost of supporting a user ofthe service in question in the subsystem in question. Metrics other than relative resource cost can also be used and combined, such as, for example, required power, interference contribution, distance from a base station, path gain, required packet transmission time, channel quantity (fraction of code tree usage or number of timeslots), carrier-interference ratio (C/I), energy per bit ($E_b$) to spectral noise density ($N_o$) ($E_b$/No), and mobile speed.

A least-cost allocation scheme, disregarding the optimal service mixes per subsystem, allocates users to the system for which $c_{iA}$ and $c_{iB}$ is minimized. For multi-service systems, the allocation scheme can, however, lead to sub-optimal service mixes in the subsystems, which in turn result in less-than-optimal combined capacity regions. To improve performance, the least-cost allocation scheme can be combined with the optimal-service-mix scheme presented above. In another embodiment ofthe invention, the optimal-service-mix scheme can be expended by taking the individual user cost into account.

In embodiments of the present invention, the subsystem service mixes can be controlled to desired levels via biasing of the relative costs of supporting a user in the different subsystems. If a larger fraction of voice users is desired in the subsystem A than in the subsystem B, the cost can be scaled up in the subsystem B and scaled down in the subsystem A. If it is desired to allocate a fraction $\beta$ of the voice users to the subsystem A, the user weights in the subsystems A and B can be multiplied by two cost offsets *f(β) and f(1-β),* so that *Prob(f(β) $c_{iA}$ <f(1-β) $c_{iB}$) = β*. A voice user is then allocated to the subsystem for which *f(β)* $c_{iA}$ and *f(1-β)* $c_{iB}$ are minimized. The cost offset *f(β)* can be derived from the distribution of the relative user costs. Typical characteristics of *f(β) are f(β=0.5)=1,* so that, for *β=0.5, Prob(f(β) $c_{iA}$<f(1-β $c_{iB}$) = Prob($c_{iA}$< $c_{iB}$) = 0.5.* Further, *f*(β) decreases with increasing β. In other words, the greater the desired fraction of users, the lower the cost offset. A few users can thus be allocated to a subsystem where their relative cost is greater than in an other subsystem in order to maintain the optimal service mixes.

The optimal-service-mix scheme can also be extended by taking individual user costs into account by swapping users that are already being served in order to decrease a sum resource cost. The user-swapping approach can be realized by first allocating a set of users based on an optimal-service mix. The set of users is periodically scanned and pairs of users in different subsystems that cost less in the other subsystem are swapped. For example, a user in a first subsystem and a user in a second subsystem could form a pair. If the user in the first subsystem would cost less in the second subsystem and the user in the second subsystem would cost less in the first subsystem, the first user and the second user could be swapped. As a result, the total cost on the system is reduced, while on average the service mix per subsystem is maintained.

Another way to extend the optimal-service-mix scheme by taking the individual user cost into account is to try both the optimal service-mix scheme and the least-cost allocation scheme at every instant or at some interval and select the scheme that, in some sense, results in the best outcome. Thus, at every instant an allocation is to be made, both schemes are tried. The scheme that achieves the best result according to some pre-defined metric is selected. The metric can be, far example, the relative load or the amount of remaining resources.

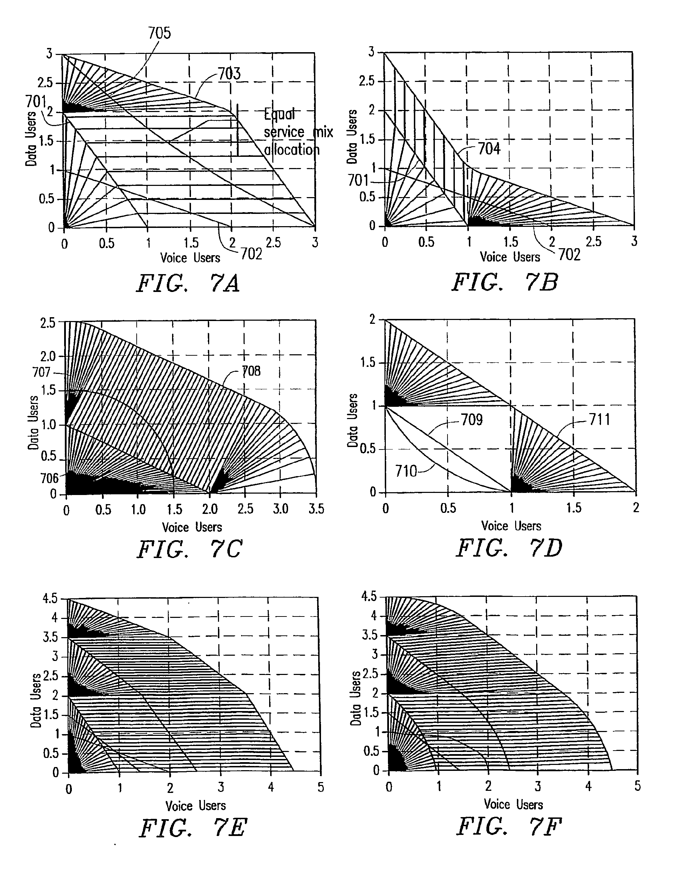

FIGURES 7A-F illustrate exemplary combined capacity regions in accordance with principles of the present invention. Under some circumstances, users already being served might have to be reallocated to another subsystem. An extreme example is shown in FIGURE 7D. In FIGURE 7D, when the total service mix goes from [<0.5 >0.5] to [>0.5 <0.5], all voice and data users should ideally change subsystem. Such dramatic behavior is expected mainly when avoiding mixing services in subsystems with concave capacity regions. Different service types may be differently flexible when efforts to sustain subsystem re-allocations are undertaken. A service with less stringent delay requirements might, for example, suffer less from a reallocation than a service with more stringent requirements.

Principles ofthe present invention apply to short-term as well as long-term time perspectives, as well as to small-scale and large-scale area perspectives. In principle, accuracy of the service allocation is determined by accuracy of the capacity regions per subsystem on which the service allocation is made. The better the accuracy of the capacity regions per subsystem reflect the time and the area over which the service allocation is made, the better overall accuracy and hence performance. Principles of the invention can be applied to service allocations on, for example, a cell, a set of cells, and a system level, as well as to allocation of, for example, packets, messages, talk spurts, calls, and sessions.

Principles ofthe present invention can also be applied to bearer selection within an access. For example, in UMTS, data service can be carried both on a dedicated channel and on a common channel, such as High Speed Downlink Packet Access (HSDPA). The selection of a bearer can then be performed in accordance with principles of the present invention based on different characteristics of the bearers. In addition, principles of the invention can be applied regardless of whether access ports of different subsystems are co-sited (i.e., co-located) or not.

Referring again to the FIGURES, FIGURES 7A-F show six examples of capacity regions, both per subsystem and combined. Starting from a point on the respective combined capacity regions, vectors corresponding to the service allocations in the subsystems can be followed towards the respective origins.

The capacity regions shown in FIGURES 7A-B assume the same two subsystems. Both subsystem 701 and subsystem 702 of FIGURES 7A and 7B have linear capacity regions; however, the capacity regions the subsystem 1 and the subsystem 2 have different slopes. A combined capacity region 703 is shown in FIGURE 7A, while a combined capacity region 704 is shown in FIGURE 7B. The capacity regions of FIGURES 7A and 7B differ in that in FIGURE 7A, use of optimal service allocation is illustrated, while in FIGURE 7B use of a worst-case allocation is illustrated.

In FIGURE 7A, since $\partial d_{701}/\partial v_{701} < \partial d_{702}/\partial v_{702}$ always holds true, optimal service allocations are found by allocating as many voice users as possible to the subsystem 702 and as many data users as possible to the subsystem 1. In other words, voice users are, as much as possible, allocated to the subsystem 702, since the subsystem 702 is relatively better at handling voice users than the subsystem 701. In similar fashion, data users are, as much as possible, allocated to the subsystem 701, since the subsystem 701 is relatively better at handling data users.

In FIGURE 7B, the allocation principle is the opposite that shown in FIGURE 7A. In FIGURE 7B, users are allocated where the cost is the largest. Comparing FIGURES 7A and 7B, it is seen that the total system capacity region 703 is significantly larger than the total system capacity region 703. As an example, for a total voice load of 2, FIGURE 7A shows management of four times as many data users than shown by FIGURE 7B.

Another way of explaining the difference between the capacity regions of FIGURE 7A and FIGURE 7B is as follows: Starting from the data-only endpoint and adding voice users while removing data users, FIGURES 7A and 7B can be identified as allocating all the new voice users in either one of the two systems. In FIGURE 7A, voice users are added to the subsystem 702, which has a lower cost per voice user measured in removed data users; consequently, performance is thus better than for FIGURE 7B. Further, the difference between FIGURE 7A and FIGURE 7B depends directly on the difference in the slopes of the capacity regions; large differences yield large gains, while equal slopes yield no gain.

Performance of a scheme that allocates services to achieve equal service mixes in both subsystems is also depicted in FIGURE 7A. The equal-service-mix scheme results in a slightly-concave combined capacity region 705. The gain over the equal-service-mix scheme of combined capacity region 705 is determined by the difference in the slopes of the individual capacity regions. As seen in FIGURE 7A, with linear capacity regions, the allocation principles become simple: a given service should, as much as possible, be directed to the system that is relatively best at supporting that service. As a result, services are mixed in only one of the systems, whereas the other system only serves one type of users.

With at least one convex capacity region, the situation becomes different, as depicted in FIGURE 7C. In FIGURE 7C, in which capacity regions of subsystems 706 and 707 are shown, an inner optimal point can be found. A combined capacity region of a system 708 is also shown. The system 708 includes the subsystems 706 and 707. To reach the optimal service mix, services should be, as much as possible, mixed in the subsystem 707 (i.e., the subsystem with the convex capacity region). Further, the service mix should be such that $\partial d_{706}/\partial v_{706} = \partial d_{707}/\partial v_{707}$. A consequence of mixing services in the subsystem 707 is that services are mixed also in the subsystem 706 (i.e., the subsystem with a linear capacity region). Hence, services are mixed in both of the subsystems 706 and 707.

FIGURE 7D depicts a situation with one linear capacity region and one concave capacity region. A capacity region of a subsystem 709 is linear, while a capacity region of a subsystem 710 is concave. A combined capacity region of a system 711 is also shown. The system 711 includes the subsystems 709 and 710. Service mixes fulfilling $\partial d_{709}/\partial v_{709} = \partial d_{710}/\partial v_{710}$ can be found in FIGURE 7D. However, in FIGURE 7D, the service mixes that fulfil $\partial d_{709}/\partial v_{709} = \partial d_{710}/\partial v_{710}$ correspond to local minima. The optimal service mixes for FIGURE 7D are instead found at the endpoints of the concave capacity region of the subsystem 710. Consequently, services are never mixed in the subsystem 710 (i.e., the subsystem with the concave capacity region). It is, however, still possible to achieve a linear combined capacity limit. FIGURE 7E and 7F depict examples similar to FIGURE 7A and FIGURE 7C above, but for three, rather than two, subsystems.

Conclusions that can be drawn from FIGURES 7A-7F include the following:

1. With linear capacity regions, services should, as much as possible, be allocated to the subsystem relatively best at supporting them.
2. Services should typically be mixed in subsystems with convex capacity regions.
3. Services should typically not be mixed in subsystems with concave regions.

Gains achievable by employing a load-sharing strategy in accordance with principles of the present invention depend on the characteristics of the individual subsystem capacity regions. The more different the subsystem capacity regions are compared to one another, typically, the higher the possible gains are.

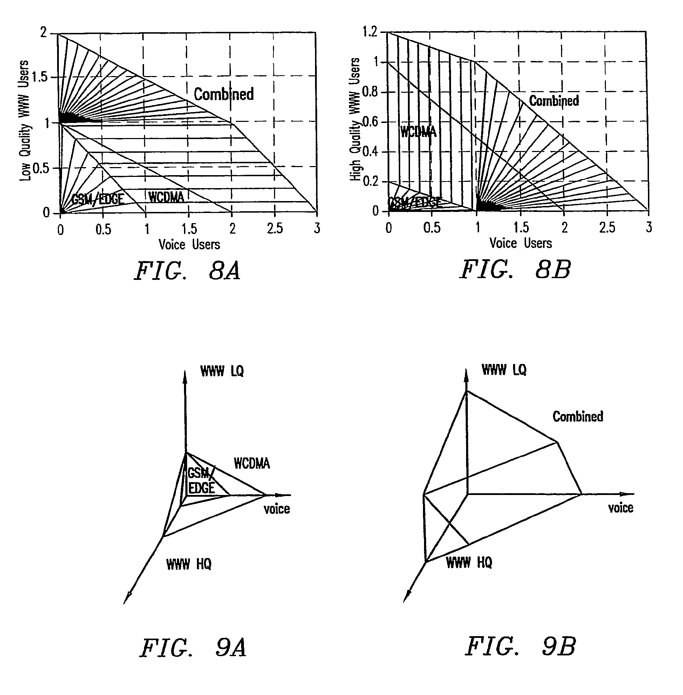

FIGURES 8A and 8B illustrate exemplary voice and worldwide web (WWW) capacity regions for GSM/EDGE and WCDMA subsystems. Mixed voice and WWW subsystem capacity regions for both GSM/EDGE Radio Access Network (GERAN) and WCDMA exist. FIGURE 8A shows subsystem capacity regions of WCDMA and GSM/EDGE in which services offered are low-quality WWW and voice. FIGURE 8B shows capacity regions of WCDMA and GSM/EDGE in which services offered are high-quality WWW and voice. Each of FIGURES 8A and 8B shows a combined capacity region.

In both FIGURE 8A and 8B, fairly linear capacity regions can often be achieved, which is what can be expected under interference-limited conditions with interference averaging. Although typical, linear regions will not always be present. In systems with some form of blocking or queuing, as well as in cases in which the maximal tolerable interference depends on the service mix, non-linear capacity regions can appear. Examples of such scenarios include GERAN-based systems with 1/3 frequency reuse, for which, for example, MR59 voice bearers become blocking limited, and WCDMA with a mix of regular and HSDPA-based bearers.

The capacity regions shown in FIGURES 8A and 8B are derived under particular system, radio, and traffic assumptions, and can thus not necessarily be directly used for multi-access capacity evaluations. However, if it is assumed that the shapes of the capacity regions do not change dramatically with different assumptions, the capacity regions in FIGURES 8A and 8B can be re-scaled to fit single-service endpoints under equal assumptions. A fair approximation should result as long as the systems stay interference-limited.

For particular voice service, system, radio, and traffic assumptions, the WCDMA voice capacity is approximately 2-3 times higher than that of GSM, as seen in FIGURES 8A and 8B. Further, the WCDMA WWW capacity ranges from about equal-to to several times greater than the GSM/EDGE WWW capacity. The ratio of WCDMA WWW capacity to GSM/EDGE WWW capacity is strongly dependent on user quality requirements. In terms of capacity region, the situation may thus be depicted as in FIGURES SA and 8B. With the GSM/EDGE capacity region as a reference, the WCDMA WWW capacity is seen to depend strongly on the user quality requirements.

For low-quality requirements, the WWW capacities of GSM/EDGE and WCDMA are comparable, whereas for high-quality requirements the capacities differ significantly. For low WWW requirements, in accordance with principles ofthe present invention, WWW users, as much as possible, should be put in the GSM/EDGE system and voice users in the WCDMA system. However, for high WWW quality requirements, the situation is the opposite, such that WWW users should be put in the WCDMA system and voice users in the GSM/EDGE system. Separating the low-quality and the high-quality situations shown in FIGURE 8A and FIGURE 8B, respectively, is a threshold WWW quality requirement, for which the capacity regions have equal slopes and combined capacity is not affected by subsystem selection. The above results can be explained by the fact that GSM/EDGE, as compared to WCDMA, is relatively efficient for low-quality WWW services, while GSM/EDGE is relatively poor for high-quality services.

The low-quality and high-quality WWW services discussed above can, of course, also be offered simultaneously, together with voice, to result in a triple-service system. A resulting exemplary three-dimensional capacity region is depicted in FIGURES 9A and 9B. Services are allocated, as in a two-system case, to the subsystem in which the services cost the least in terms of the other services. In FIGURES 9A and 9B, high-quality WWW services are, as much as possible, mapped to WCDMA. Voice services are mapped to WCDMA, unless WCDMA is fully loaded with high-quality WWW services.

Mathematical Derivation

A derivation of optimal service allocations for a two-service, two-access case is described below. How the result of the two-service, two-access case derivation can be generalized to an arbitrary number of services and an arbitrary number of subsystems is then described. Finding the optimal service mappings in a two-system, two-service case can be performed as described below.

Given the voice-data capacity regions of two subsystems, $d_1(v_1)$ and $d_2(v_2)$, for a total voice load $v=v_1+v_2$, what $v_1$ and $v_2$ maximize the sustainable data load $d = d_1 + d_2$? (In optimization theory terms, d is referred to as the objective function and $v_1$ and $v_2$ are referred to as control variables.) For a fixed voice load $v$, $d$ is given by:

$$d(v_1, v_2) = d_1(v_1) + d_2(v_2) = d_1(v_1) + d_2(v - v_1),$$

wherein

$$max(0, v - v_{2max}) \leq v_1 \leq min(v, v_{1max})$$

To maximize d, the derivative of d with respect to $v_1$ is derived as follows:

$$\frac{\partial}{\partial_{v1}} d(v_1, v_2) = \frac{\partial}{\partial_{v1}} (d_1(v_1) + d_2(v - v_1)) = \frac{\partial}{\partial_{v1}} (d_1(v_1)) - \frac{\partial}{\partial_{v2}} (d_2(v - v_1))$$

The zeros are thus found at $v_1$*, such that:

$$\frac{\partial}{\partial_{v1}} (d_1(v_1^*)) = \frac{\partial}{\partial_{v2}} (d_2(v - v_1^*))$$

Whether the zero-slope points found correspond to local maxima or minima of d depends on whether the second derivative of d is smaller than or greater than zero, respectively:

$$\frac{\partial^2}{\partial_{v1}^2} d(v_1^*, v_2) - \frac{\partial^2}{\partial_{v1}^2} (d_1(v_1^*)) + \frac{\partial^2}{\partial_{v2}^2} (d_2(v - v_1^*)) \neq 0$$

If no zeros of the first derivative are found, the maximal values of d are to be found at the extreme values of $v_1$:

$$\text{If } \frac{\partial}{\partial_{v1}} d(v_1, v_2) = \frac{\partial}{\partial_{v1}}(d_1(v_1)) - \frac{\partial}{\partial_{v2}}(d_2(v - v_1)) > 0:$$

$$v_1^* = max(v_1) = min(v, v_{1max})$$

$$\text{If } \frac{\partial}{\partial_{v1}} d(v_1, v_2) = \frac{\partial}{\partial_{v1}}(d_1(v_1)) - \frac{\partial}{\partial_{v2}}(d_2(v - v_1)) < 0:$$

$$v_1^* = min(v_1) = max(0, v - v_{2max})$$

To find global maxima of d, all local maxima must be compared, including the extreme values of $v_1$. Further, to find optimal service allocations for the whole range of service mixes, and thus calculate the combined capacity region, first and second derivative calculations as described above must be repeated for all total voice loads $v \in [0, v_{1max} + v_{2max}]$. Optimal sharing points are characterized in that the cost in data users per voice user is equal in both subsystems. This is intuitively pleasing, since if this were not the case, a better solution could be found by moving data users from the more expensive subsystem to the less expensive subsystem.

A maximum in between the endpoints is found only if the sum of the second derivatives is greater than zero, which intuitively means that either both subsystem capacity regions are convex, or one is more convex than the other is concave. If this is not the case, the most efficient load sharing is found at the extreme points; in other words, by, as much as possible, separating voice and data users. As seen above, $v_1$, should be maximized if the cost per voice user is smaller in subsystem 1 than in subsystem 2, and vice versa.

The two-service optimization procedure described above can be modified to hold for an arbitrary number of services. For a three-service case, the result is outlined as follows: Given the voice-data-streaming capacity regions of two subsystems, $d_1(v_1, s_1)$ and $d_2(v_2, s_2)$, for a total voice and streaming load $v=v_1+v_2$, and $s=s_1+s_2$, what $v_1$ and $v_2$, and $s_1$, and $S_2$ maximize the sustainable data load $d=d_1+d_2$? (In optimization theory terms, d is referred to as the objective function and $v_1$, and $v_2$ and $s_1$ and $s_2$ are referred to as control variables.) For fixed voice and streaming loads v and s, d is given by:

$$d(v_1, v_2, s_1, s_2) = d_1(v_1, s_1) + d_2(v_2, s_2) = d_1(v_1, s_1) + d_2(v - v_1, s - s_1)$$

To maximize d, the partial derivatives of d with respect to $v_1$ and $s_1$, are derived:

$$\frac{\partial}{\partial_{v1}} d(v_1, v_2, s_1, s_2) = \frac{\partial}{\partial_{v1}}(d_1(v_1, s_1)) - \frac{\partial}{\partial_{v2}}(d_2(v - v_1, s - s_1))$$

$$\frac{\partial}{\partial_{s1}} d(v_1, v_2, s_1, s_2) = \frac{\partial}{\partial_{s1}}(d_1(v_1, s_1)) - \frac{\partial}{\partial_{s2}}(d_2(v - v_1, s - s_1))$$

The zeros are thus found at $v_1^*$ and $s_1^*$, such that:

$$\frac{\partial}{\partial_{v1}}(d_1(v_1^*, s_1^*)) = \frac{\partial}{\partial_{v2}}(d_2(v - v_1^*, s - s_1^*))$$

$$\frac{\partial}{\partial_{s1}}(d_1(v_1^*, s_1^*)) = \frac{\partial}{\partial_{s2}}(d_2(v - v_1^*, s - s_1^*))$$

Whether the zero-slope points correspond to local maxima, minima, or saddle-point values of $d$ depends on the characteristics of the second derivatives ofd. Further, if no joint zeros of the first derivatives are found, or the first derivatives correspond to minima, the maximal values of d are to be found at the extreme values of $v_1$. Note that the first derivatives are no longer single-valued, but rather are functions of the streaming load. Also note that the graphical scheme in accordance with principles of the present invention described above can also be applied for three-service systems, as long as the number of subsystems is limited to two.

Given the sub-system capacities $C^m(\overline{\alpha}^m)$, $m = 1,...,M$, for a total service mix $\overline{\overline{\alpha}}$, what relative sub-system service allocations $\beta_n^{m*}$ $m = 1, ..., M$ and $n = 1, ..., N$, maximize the combined capacity $C^{\wedge}(\overline{\alpha})$ ? It is somewhat tedious to analytically directly maximize $C^{\wedge}(\overline{\alpha})$ with regard to $\beta_n^m$. Numerically, this may be easily done by, for example, the gradient method,

To simplify the analysis, the sub-system capacities are first expressed in the form $C_N^m = f_N^m(C_1^m, ..., C_{N-1}^m)$. Then, the combined capacity of services $1$ - $N$-1, i.e. $C_1, ..., C_{N-1}$, is held constant, and the service allocations $C_1^m, ..., C_{N-1}^m$ that maximize the combined service -N- capacity $C^{\wedge}N$ are derived. Having performed this optimization, corresponding values of the total service mix and the sub-system service allocations may be calculated. By repeating the procedure for the range of capacities for services 1, ..., $N$-1, a full mapping between total service mixes and near-optimum relative subsystem service allocations is thus obtained. The approximate combined service-$N$-capacity is given by:

$$\hat{C}_N = \sum_{m=1}^{M} C_N^m = \sum_{m=1}^{M} f_N^m\left(C_1^m, ..., C_{N-1}^m\right)$$

For fixed combined capacities $C_1, ..., C_{N-1}$, the capacities of the $M^{th}$ sub-system for these services are implicitly given by the capacities of sub-systems 1, ..., $M$-1:

$$C_n^M = C_n - \sum_{k=1}^{M-1} C_n^k .$$

Utilizing this $C^{\wedge}N$ becomes:

$$\hat{C}_N = \sum_{m=1}^{M} f_N^m\left(C_1^m, ..., C_{N-1}^m\right) = \sum_{m=1}^{M-1} f_N^m\left(C_1^m, ..., C_{N-1}^m\right) + f_N^M(C_1^M, ..., C_{N-1}^M)\Big|_{C_n^M = C_n - \sum_{k=1}^{M-1} C_n^k}$$

To maximize $C^{\wedge}N$, the partial derivatives with respect to $C_n^m$ are taken:

$$\frac{\partial \hat{C}_N}{\partial C_n^m} = \frac{\partial}{\partial C_n^m}\left[\sum_{m=1}^{M-1} f_N^m\left(C_1^m,...,C_{N-1}^m\right)\right] + \frac{\partial}{\partial C_n^m}\left[f_N^M\left(C_1^M,...,C_{N-1}^M\right)\Big|_{C_n^M=C_n-\sum_{k=1}^{M-1}C_n^k}\right] =$$

$$= \frac{\partial f_N^m}{\partial C_n^m}\left(C_1^m,...,C_{N-1}^m\right) - \frac{\partial f_N^M}{\partial C_n^M}\left(C_1^M,...,C_{N-1}^M\right) \text{ for } n = 1,...,N-1, m = 1,...,M-1$$

At local extreme points, all the partial derivatives are zero. Local near-optima are thus found at sub-system service allocations $C_n^{m*}$ such that the partial derivatives with respect to service $n$ in all sub-systems equal the corresponding partial derivatives in sub-system $M$. Further, since this holds for all $m$:

$$\frac{\partial f_N^m}{\partial C_n^m}\left(C_1^{m^{\cdot}},...,C_{N-1}^{m^{\cdot}}\right) = \frac{\partial f_N^p}{\partial C_n^p}\left(C_1^{p^{\cdot}},...,C_{N-1}^{p^{\cdot}}\right) \ \forall \ p, k \text{ and } n = 1,...,N-1$$

Thus, near-optimum service allocations are characterized by that the partial derivatives with respect to all services are equal in all sub-systems. Whether these points correspond to local maximums, minimums or saddle points of $C^{\wedge}_N$ depend

on the characteristics of the second-degree partial derivatives $\partial^2 f_N^m / \partial (C_n^m)^2$ . Further boundary points must also be searched and compared to the inner local maximums before a global maximum can be established.

Having determined the near-optimum sub-system service allocations $C_n^{m*}$ and the resulting $C_n^*$ and $C^*$, a pair of total service mix and near-optimum relative subsystem service allocations may easily be calculated by:

$$\beta_n^{m*} = \frac{C_n^{m*}}{C_n^*}$$

By repeating the procedure for the range of capacities for service 1, ..., $N-1$, a full mapping between total service mixes and near-optimum sub-system service allocations is obtained. Random search mechanisms can also be applied in accordance with principles of the present invention. Such mechanisms try different combinations until, for example, an acceptable solution is found.

Although embodiment(s) of the present invention have been illustrated in the accompanying Drawings and described in the foregoing Detailed Description, it will be understood that the present invention is not limited to the embodiment(s) disclosed, but is capable of numerous rearrangements, modifications, and substitutions without departing from the invention defined by the following claims.

**Claims**

1.   A method of allocating users in a multi-access communications system comprising a plurality of subsystems and offering a plurality of services, the method **characterized in**

determining a plurality of capacity regions, each of the plurality of capacity regions corresponding to a subsystem of the plurality of subsystems;
determining a combined capacity region based on the determined plurality of capacity regions; and
allocating at least one user among the plurality of subsystems using information from the determined combined capacity region.

2. The method of claim 1, wherein the step of determining the plurality of capacity regions comprises:

determining, for a fixed mix of users among the plurality of services in a subsystem of the plurality of subsystems, a maximal aggregate load of the subsystem at which all of the plurality of services in the subsystem achieve acceptable quality; and
repeating the step of determining the maximal aggregate load over a range of possible mixes of users among the plurality of services in the subsystem.

3. The method of claim 1, wherein the step of determining the combined capacity region comprises summing the determined plurality of capacity regions.

4. The method of claim 1, wherein each of the plurality of determined capacity regions is linear.

5. The method of claim 4, wherein the step of allocating the at least one user is based on a slope of each of the determined linear capacity regions.

6. The method of claim 1, wherein the step of allocating comprises:

calculating a total service mix in response to a pre-determined trigger;
determining an optimal service mix for each of the plurality of subsystems;
calculating a relative load per service and subsystem prior to the pre-determined trigger; and
determining a relatively least-loaded subsystem.

7. The method of claim 6, wherein the step of allocating comprises:

allocating a new arrival in the relatively least-loaded subsystem; and
wherein the pre-determined trigger is the new arrival.

8. The method of claim 6, wherein the step of allocating comprises:

determining whether relative loads among the plurality of subsystems are balanced;
responsive to a determination that the relative loads are not balanced, reallocating services among the plurality of subsystems.

9. The method of claim 1, wherein the step of allocating comprises:

calculating a total service mix; and
distributing users among the plurality of subsystems according to optimal service mixes per subsystem for the measured total service mix.

10. The method of claim 1, where the step of determining the combined capacity region comprises:

mirroring a first determined capacity region of the plurality of determined capacity regions;
placing the origin of the mirrored first determined capacity region on a line corresponding to a fixed service mix;
moving the mirrored first determined capacity region as far from the origin of a second determined capacity region of the plurality of determined capacity regions while still maintaining a coinciding point with the second determined capacity region.

11. The method of claim 1, wherein the plurality of services are mixed-as much as possible in the plurality of subsystems.

12. The method of claim 1, where plurality of services are isolated as much as possible in the plurality of subsystems.

13. The method of claim 1, wherein the step of determining is performed relative to one cell of the communications system.

14. The method of claim 1, wherein the step of determining is performed over a plurality of cells belonging to a single site

15. The method of claim 1, wherein the step of determining is performed over a plurality of cells belonging to a single base station.

16. The method of claim 1, wherein the step of determining is performed over a plurality of cells.

17. The method of claim 1, wherein the step of allocating comprises using an individual cost of each of a plurality of users of the communications system.

18. The method of claim 17, wherein the individual cost of a user comprises a measure of how much the user fills at least one capacity region of the plurality of capacity regions.

19. The method of claim 18, wherein the individual user cost is based on a metric comprising at least one of relative resource cost, required power, interference contribution, distance from base station, path gain, required packet transmission time, channel quality, signal-to-interference ratio, channel quantity, and mobile station speed.

20. The method of claim 18, further comprising, following the step of allocating:

   determining if any users in a first subsystem would cost less in a second subsystem;
   determining if any users in the second subsystem would cost less in the first subsystem;
   pairing users identified as costing less in the first subsystem with users identified as costing less in the second subsystem; and
   swapping the paired users between the first subsystem and the second subsystem.

21. The method of claim 1, where the step of allocating comprises using biased user costs.

22. The method of claim 6, wherein the step of allocating comprises:

   allocating a new arrival in the relatively least-loaded subsystem;

   wherein the pre-determined trigger is the new arrival;
   determining whether relative loads among the plurality of subsystems are balanced; and
   responsive to a determination that the relative loads are not balanced, reallocating services among the plurality of subsystems.

23. The method of claim 6, wherein:

   the step of allocating comprises using an individual cost of each of a plurality of users of the communications system; and
   the individual cost of a user comprises a measure of how much the user fills at least one capacity region of the plurality of capacity regions.

24. The method of claim 7, wherein:

   the step of allocating comprises using an individual cost of each of a plurality of users of the communications system; and
   the individual cost of a user comprises a measure of how much the user fills at least one capacity region of the plurality of capacity regions.

25. The method of claim 8, wherein:

   the step of allocating comprises using an individual cost of each of a plurality of users of the communications system; and
   the individual cost of a user comprises a measure of how much the user fills at least one capacity region of the plurality of capacity regions.

26. The method of claim 9, wherein:

   the step of allocating comprises using an individual cost of each of a plurality of users of the communications system; and
the individual cost of a user comprises a measure of how much the user fills at least one capacity region of the plurality of capacity regions.

**Patentansprüche**

1. Verfahren zur Zuweisung von Teilnehmern in einem Mehrfachzugriff-Kommunikationssystem, das eine Vielzahl von Teilsystemen umfaßt und eine Vielzahl von Diensten anbietet, wobei das Verfahren **gekennzeichnet ist durch**:

   Bestimmen einer Vielzahl von Kapazitätsbereichen, wobei jeder der Vielzahl von Kapazitätsbereichen einem Teilsystem der Vielzahl von Teilsystemen entspricht;
   Bestimmen eines kombinierten Kapazitätsbereichs auf der Grundlage der bestimmten Vielzahl von Kapazitätsbereichen; und
   Zuweisen zumindest eines Teilnehmers unter der Vielzahl von Teilsystemen unter Verwendung von Information aus dem bestimmten kombinierten Kapazitätsbereich.

2. Verfahren nach Anspruch 1, wobei der Schritt des Bestimmens der Vielzahl von Kapazitätsbereichen umfaßt:

   für eine feststehende Mischung von Teilnehmern unter der Vielzahl von Diensten in einem Teilsystem der Vielzahl von Teilsystemen, Bestimmen einer maximalen Gesamtlast des Teilsystems, bei der alle aus der Vielzahl von Diensten im Teilsystem eine akzeptable Qualität erreichen; und
   Wiederholen des Schritts des Bestimmens der maximalen Gesamtlast über einen Bereich von möglichen Mischungen von Teilnehmern unter der Vielzahl von Diensten im Teilsystem.

3. Verfahren nach Anspruch 1, wobei der Schritt des Bestimmens des kombinierten Kapazitätsbereichs umfaßt: Summieren der bestimmten Vielzahl von Kapazitätsbereichen.

4. Verfahren nach Anspruch 1, wobei jeder der Vielzahl von bestimmten Kapazitätsbereichen linear ist.

5. Verfahren nach Anspruch 4, wobei der Schritt des Zuweisens des mindestens einen Teilnehmers auf einem Anstieg jedes der bestimmten linearen Kapazitätsbereiche beruht.

6. Verfahren nach Anspruch 1, wobei der Zuweisungsschritt umfaßt:

   Berechnen einer Gesamt-Dienstmischung als Antwort auf einen vorbestimmten Auslöser;
   Bestimmen einer optimalen Dienstmischung für jedes der Vielzahl von Teilsystemen;
   Berechnen einer relativen Last pro Dienst und Teilsystem vor dem vorbestimmten Auslöser; und
   Bestimmen eines relativ am wenigsten belasteten Teilsystems.

7. Verfahren nach Anspruch 6, wobei der Zuweisungsschritt umfaßt:

   Zuweisen einer Neuankunft in dem relativ am wenigsten belasteten Teilsystem; und
   wobei der vorbestimmte Auslöser die Neuankunft ist.

8. Verfahren nach Anspruch 6, wobei der Zuweisungsschritt umfaßt:

   Bestimmen, ob relative Lasten unter der Vielzahl von Teilsystemen ausgeglichen sind;
   als Antwort auf eine Bestimmung, daß die relativen Lasten nicht ausgeglichen sind, Neuzuweisen von Diensten unter der Vielzahl von Teilsystemen.

9. Verfahren nach Anspruch 1, wobei der Zuweisungsschritt umfaßt:

   Berechnen einer Gesamt-Dienstmischung; und
   Verteilen von Teilnehmern auf die Vielzahl von Teilsystemen gemäß optimalen Dienstmischungen pro Teilsystem für die gemessene Gesamt-Dienstmischung.

10. Verfahren nach Anspruch 1, wobei der Schritt des Bestimmens des kombinierten Kapazitätsbereichs umfaßt:

Spiegeln eines ersten bestimmten Kapazitätsbereichs der Vielzahl von bestimmten Kapazitätsbereichen;
Plazieren des Ursprungs des gespiegelten ersten bestimmten Kapazitätsbereichs auf einer Linie, die einer feststehenden Dienstmischung entspricht;
Bewegen des gespiegelten ersten bestimmten Kapazitätsbereichs so weit weg vom Ursprung eines zweiten bestimmten Kapazitätsbereichs der Vielzahl von bestimmten Kapazitätsbereichen, während ein mit dem zweiten bestimmten Kapazitätsbereich übereinstimmender Punkt weiterhin beibehalten wird.

11. Verfahren nach Anspruch 1, wobei die Vielzahl von Diensten in der Vielzahl von Teilsystemen so stark wie möglich gemischt wird.

12. Verfahren nach Anspruch 1, wobei die Vielzahl von Diensten in der Vielzahl von Teilsystemen so stark wie möglich getrennt wird.

13. Verfahren nach Anspruch 1, wobei der Bestimmungsschritt relativ zu einer Zelle des Kommunikationssystems durchgeführt wird.

14. Verfahren nach Anspruch 1, wobei der Bestimmungsschritt über eine Vielzahl von Zellen durchgeführt wird, die zu einem einzelnen Standort gehören.

15. Verfahren nach Anspruch 1, wobei der Bestimmungsschritt über eine Vielzahl von Zellen durchgeführt wird, die zu einer einzelnen Basisstation gehören.

16. Verfahren nach Anspruch 1, wobei der Bestimmungsschritt über eine Vielzahl von Zellen durchgeführt wird.

17. Verfahren nach Anspruch 1, wobei der Bestimmungsschritt umfaßt: Verwenden individueller Kosten jedes aus einer Vielzahl von Teilnehmern des Kommunikationssystems.

18. Verfahren nach Anspruch 17, wobei die individuellen Kosten eines Teilnehmers ein Maß dafür umfassen, wie sehr der Teilnehmer mindestens einen Kapazitätsbereich der Vielzahl von Kapazitätsbereichen ausfüllt.

19. Verfahren nach Anspruch 18, wobei die individuellen Teilnehmerkosten auf einer Metrik beruhen, die mindestens eines von folgendem umfaßt: relative Ressourcenkosten, erforderliche Leistung, Störungsbeitrag, Entfernung von der Basisstation, Streckengewinn, erforderliche Paketübertragungszeit, Kanalqualität, Störabstand, Kanalquantität und Geschwindigkeit der Mobilstation.

20. Verfahren nach Anspruch 18, nach dem Zuweisungsschritt ferner umfassend:

Bestimmen, ob irgendwelche Teilnehmer in einem ersten Teilsystem in einem zweiten Teilsystem weniger kosten würden;
Bestimmen, ob irgendwelche Teilnehmer im zweiten Teilsystem im ersten Teilsystem weniger kosten würden;
Paaren von Teilnehmern, die als im ersten Teilsystem als weniger kostend identifiziert werden, mit Teilnehmern, die als im zweiten Teilsystem als weniger kostend identifiziert werden; und
Austauschen der gepaarten Teilnehmer zwischen dem ersten Teilsystem und dem zweiten Teilsystem.

21. Verfahren nach Anspruch 1, wobei der Zuweisungsschritt umfaßt: Verwenden vorgewichteter Teilnehmerkosten.

22. Verfahren nach Anspruch 6, wobei der Zuweisungsschritt umfaßt:

Zuweisen einer Neuankunft in dem relativ am wenigsten belasteten Teilsystem; wobei der vorbestimmte Auslöser die Neuankunft ist;
Bestimmen, ob relative Lasten unter der Vielzahl von Teilsystemen ausgeglichen sind; und
als Antwort auf eine Bestimmung, daß die relativen Lasten nicht ausgeglichen sind, Neuzuweisen von Diensten unter der Vielzahl von Teilsystemen.

23. Verfahren nach Anspruch 6, wobei:

der Zuweisungsschritt umfaßt: Verwenden individueller Kosten jedes aus einer Vielzahl von Teilnehmern des Kommunikationssystems; und

die individuellen Kosten eines Teilnehmers ein Maß dafür umfassen, wie sehr der Teilnehmer mindestens einen Kapazitätsbereich der Vielzahl von Kapazitätsbereichen ausfüllt.

**24.** Verfahren nach Anspruch 7, wobei:

der Zuweisungsschritt umfaßt: Verwenden individueller Kosten jedes aus einer Vielzahl von Teilnehmern des Kommunikationssystems; und
die individuellen Kosten eines Teilnehmers ein Maß dafür umfassen, wie sehr der Teilnehmer mindestens einen Kapazitätsbereich der Vielzahl von Kapazitätsbereichen ausfüllt.

**25.** Verfahren nach Anspruch 8, wobei:

der Zuweisungsschritt umfaßt: Verwenden individueller Kosten jedes aus einer Vielzahl von Teilnehmern des Kommunikationssystems; und
die individuellen Kosten eines Teilnehmers ein Maß dafür umfassen, wie sehr der Teilnehmer mindestens einen Kapazitätsbereich der Vielzahl von Kapazitätsbereichen ausfüllt.

**26.** Verfahren nach Anspruch 9, wobei:

der Zuweisungsschritt umfaßt: Verwenden individueller Kosten jedes aus einer Vielzahl von Teilnehmern des Kommunikationssystems; und
die individuellen Kosten eines Teilnehmers ein Maß dafür umfassen, wie sehr der Teilnehmer mindestens einen Kapazitätsbereich der Vielzahl von Kapazitätsbereichen ausfüllt.

**Revendications**

**1.** Procédé d'attribution à des utilisateurs dans un système de communication multi-accès comprenant une pluralité de sous-systèmes et offrant une pluralité de services, le procédé étant **caractérisé par**:

la détermination d'une pluralité de régions de capacité, chacune de la pluralité de régions de capacité correspondant à un sous-système de la pluralité de sous-systèmes;
la détermination d'une région de capacité combinée sur la base de la pluralité déterminée de régions de capacité; et
l'attribution à au moins un utilisateur parmi la pluralité de sous-systèmes en utilisant une information en provenance de la région de capacité combinée déterminée.

**2.** Procédé selon la revendication 1, dans lequel l'étape de détermination de la pluralité de régions de capacité comprend:

la détermination, pour une combinaison fixée d'utilisateurs parmi la pluralité de services dans un sous-système de la pluralité de sous-systèmes, d'une charge agrégée maximum du sous-système à laquelle tous les services de la pluralité de services dans le sous-système atteignent une qualité acceptable; et
la répétition de l'étape de détermination de la charge agrégée maximum sur une plage de combinaisons possibles d'utilisateurs parmi la pluralité de services dans le sous-système.

**3.** Procédé selon la revendication 1, dans lequel l'étape de détermination de la région de capacité combinée comprend la sommation de la pluralité déterminée de régions de capacité.

**4.** Procédé selon la revendication 1, dans lequel chacune de la pluralité de régions de capacité déterminée est linéaire.

**5.** Procédé selon la revendication 4, dans lequel l'étape d'attribution à l'au moins un utilisateur est basée sur une pente de chacune des régions de capacité linéaire déterminée.

**6.** Procédé selon la revendication 1, dans lequel l'étape d'attribution comprend:

le calcul d'une combinaison de services totale en réponse à un déclencheur prédéterminé;
la détermination d'une combinaison de services optimum pour chacun de la pluralité de sous-systèmes;

le calcul d'une charge relative par service et sous-système avant le déclencheur prédéterminé; et
la détermination du sous-système relativement le moins chargé.

7. Procédé selon la revendication 6, dans lequel l'étape d'attribution comprend:

l'attribution d'une nouvelle arrivée dans le sous-système relativement le moins chargé; et
dans lequel le déclencheur prédéterminé est la nouvelle arrivée.

8. Procédé selon la revendication 6, dans lequel l'étape d'attribution comprend:

le fait de déterminer si des charges relatives parmi la pluralité de sous-systèmes sont équilibrées;
en réponse à la détermination que les charges relatives ne sont pas équilibrées, la réattribution de services entre la pluralité de sous-systèmes.

9. Procédé selon la revendication 1, dans lequel l'étape d'attribution comprend:

le calcul d'une combinaison de services totale; et
la distribution à des utilisateurs parmi la pluralité de sous-systèmes conformément à des combinaisons de services optimales par sous-système pour la combinaison de services totale mesurée.

10. Procédé selon la revendication 1, dans lequel l'étape de détermination de la région de capacité combinée comprend:

l'effet miroir d'une première région de capacité déterminée de la pluralité de régions de capacité déterminée;
le placement de l'origine de la première région de capacité déterminée en miroir sur une ligne correspondant à une combinaison de services fixe;
le déplacement de la première région de capacité déterminée en miroir loin de l'origine d'une seconde région de capacité déterminée de la pluralité de régions de capacité déterminée tout en maintenant toujours un point de coïncidence avec la seconde région de capacité déterminée.

11. Procédé selon la revendication 1, dans lequel la pluralité de services sont combinés autant que possible dans la pluralité de sous-systèmes.

12. Procédé selon la revendication 1, dans lequel la pluralité de services sont isolés autant que possible dans la pluralité de sous-systèmes.

13. Procédé selon la revendication 1, dans lequel l'étape de détermination est réalisée en relation avec une cellule du système de communication.

14. Procédé selon la revendication 1, dans lequel l'étape de détermination est réalisée sur une pluralité de cellules appartenant à un unique site.

15. Procédé selon la revendication 1, dans lequel l'étape de détermination est réalisée sur une pluralité de cellules appartenant à une unique station de base.

16. Procédé selon la revendication 1, dans lequel l'étape de détermination est réalisée sur une pluralité de cellules.

17. Procédé selon la revendication 1, dans lequel l'étape d'attribution comprend l'utilisation d'un coût individuel de chacun d'une pluralité d'utilisateurs du système de communication.

18. Procédé selon la revendication 17, dans lequel le coût individuel d'un utilisateur comprend une mesure du degré selon lequel l'utilisateur remplit au moins une région de capacité de la pluralité de régions de capacité.

19. Procédé selon la revendication 18, dans lequel le coût d'utilisateur individuel est basé sur une mesure comprenant au moins un élément pris parmi un coût de ressource relatif, une puissance requise, une contribution d'interférence, une distance par rapport à une station de base, un gain de voie, un temps de transmission de paquet reçu, une qualité de canal, un rapport signal sur interférence, une quantité de canal et une vitesse de station mobile.

20. Procédé selon la revendication 18, comprenant en outre, à la suite de l'étape d'attribution:

le fait de déterminer si de quelconques utilisateurs dans un premier sous-système coûteraient moins dans un second sous-système ;

le fait de déterminer si de quelconques utilisateurs dans le second système coûteraient moins dans le premier sous-système ;

le regroupement d'utilisateurs identifiés comme coûtant moins dans le premier sous-système avec des utilisateurs identifiés comme coûtant moins dans le second sous-système ; et

la permutation des utilisateurs regroupés entre le premier sous-système et le second sous-système.

21. Procédé selon la revendication 1, dans lequel l'étape d'attribution comprend l'utilisation de coûts d'utilisateur pondérés.

22. Procédé selon la revendication 6, dans lequel l'étape d'attribution comprend :

l'attribution d'une nouvelle arrivée dans le sous-système relativement le moins chargé ; dans lequel le déclencheur prédéterminé est la nouvelle arrivée ;

le fait de déterminer si des charges relatives entre la pluralité de sous-systèmes sont équilibrées ; et

en réponse à une détermination du fait que les charges relatives ne sont pas équilibrées, la réattribution de services entre la pluralité de sous-systèmes.

23. Procédé selon la revendication 6, dans lequel :

l'étape d'attribution comprend l'utilisation d'un coût individuel de chacun d'une plurality d'utilisateurs du système de communication ; et

le coût individuel d'un utilisateur comprend une mesure du degré selon lequel l'utilisateur remplit au moins une région de capacité de la pluralité de régions de capacité.

24. Procédé selon la revendication 7, dans lequel :

l'étape d'attribution comprend l'utilisation d'un coût individuel de chacun d'une pluralité d'utilisateurs du système de communication ; et

le coût individuel d'un utilisateur comprend une mesure du degré selon lequel l'utilisateur remplit au moins une région de capacité de la pluralité de régions de capacité.

25. Procédé selon la revendication 8, dans lequel :

l'étape d'attribution comprend l'utilisation d'un coût individuel de chacun d'une pluralité d'utilisateurs du système de communication ; et

le coût individuel d'un utilisateur comprend une mesure du degré selon lequel l'utilisateur remplit au moins une région de capacité de la pluralité de régions de capacité.

26. Procédé selon la revendication 9, dans lequel :

l'étape d'attribution comprend l'utilisation d'un coût individuel de chacun d'une pluralité d'utilisateurs du système de communication ; et

le coût individuel d'un utilisateur comprend une mesure du degré selon lequel l'utilisateur remplit au moins une région de capacité de la pluralité de régions de capacité.

FIG. 1

FIG. 2

FIG. 3

FIG. 4

FIG. 5

FIG. 6A

FIG. 6B

FIG. 10

FIG. 7A

FIG. 7B

FIG. 7C

FIG. 7D

FIG. 7E

FIG. 7F

FIG. 8A

FIG. 8B

FIG. 9A

FIG. 9B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0152567 A2